# FASCICULE DE BREVET EUROPEEN

(11) **EP 0 946 246 B1**
(45) Date de publication et mention de la délivrance du brevet: **31.01.2001**
(21) Numéro de dépôt: 97910493.2
(22) Date de dépôt: 16.10.1997
(51) Int. Cl.: B01D 29/27

(54) **POCHE FILTRANTE A HAUTE CAPACITE DE RETENTION**
FILTERBEUTEL MIT HOHER RÜCKHALTEKAPAZITÄT
FILTERING BAG WITH HIGH RETENTION CAPACITY

(30) Priorité: 16.10.1996 FR 9612847
(43) Date de publication de la demande: 06.10.1999
(73) Titulaire: USF Filtration, 69360 Ternay (FR)
(72) Inventeur: AILLET, Guy, André, Paul, F-69005 Lyon (FR)
(74) Mandataire: Maureau, Philippe
(86) Numéro de dépôt international: FR9701848
(87) Numéro de publication internationale: WO9816291

(56) Documents cités:
- EP-A- 0 308 098
- DE-A- 1 812 575
- FR-A- 630 636
- US-A- 5 565 097

## Description

La présente invention concerne une poche filtrante à haute capacité de rétention.

Les poches filtrantes sont utilisées notamment pour la filtration industrielle de liquides. Elles sont mises en oeuvre dans de nombreux secteurs de l'industrie, comme par exemple l'industrie chimique, l'industrie alimentaire, la construction automobile ou aéronautique.

Deux qualités principales caractérisent généralement les poches filtrantes : l'efficacité de filtration et la capacité de rétention.

L'efficacité de filtration indique la taille des particules qui sont retenues par la poche filtrante. Cette taille est généralement de l'ordre de quelques microns. La poche arrête toutes les particules dont la taille dépasse une certaine taille. Cette efficacité donne une indication sur la qualité de la filtration réalisée par la poche filtrante.

La capacité de rétention indique la quantité de particules que la poche filtrante peut arrêter. Cette caractéristique influe sur la durée de vie d'une poche. Plus la capacité de rétention est importante, plus la durée de vie de la poche est longue. Les changements de la poche filtrante sont alors moins nombreux de même que les interventions sur le filtre. De ce fait l'entretien du filtre est moins onéreux.

Pour augmenter la capacité de rétention d'une poche filtrante, il est connu d'employer une pluralité de couches de matériau filtrant, placées les unes à la suite des autres. Une partie des particules à filtrer est retenue à chaque couche. Si les couches sont identiques, la plus grande partie des particules est recueillie par la première couche de matériau filtrant, celle qui se trouve en amont. Les autres couches, placées plus en aval filtrent un liquide déjà débarrassé de ses particules par la première couche.

Pour éviter cet inconvénient, des couches filtrantes différentes sont empilées les unes sur les autres de telles sorte que les couches amont filtrent les particules de taille plus importante alors que les couches en aval filtrent les particules plus fines. La dimension' des pores des éléments filtrant diminue donc de l'amont vers l'aval.

Ce type de filtre est efficace lorsque les particules à filtrer présentent une répartition dimensionnelle assez large. Par contre, lorsque cette répartition est étroite, une seule couche de matériau filtrant réalise la filtration : les couches en amont laissent passer les particules et les couches en aval filtrent un liquide déjà débarrassé de ses particules.

Le brevet européen EP-0 306 231 décrit un élément filtrant qui permet d'augmenter sensiblement la capacité de rétention d'un filtre. Cet élément filtrant comporte une pluralité de couches d'un matériau filtrant dont au moins une couche comporte un ouverture à travers laquelle une partie du fluide peut s'écouler sans être filtrée et au moins une couche en aval exempte de telles ouvertures. Une couche de matériau de transport est prévue en aval de chaque couche filtrante comportant des ouvertures et enfin une couche de matériau préfiltrant souple est placée en amont de la pluralité de couches filtrantes.

Cet élément filtrant permet d'augmenter la capacité de rétention d'un filtre par rapport aux filtres décrits plus haut, même lorsque la répartition dimensionnelle des particules est relativement étroite. Cependant sa structure est relativement complexe.

Le document FR 630 636 décrit un filtre, notamment un filtre à huile, comportant, dans un récipient en tôle, une couche de matériau filtrant plissée de façon à réaliser un plissé concentrique, c'est-à-dire que la couche est pliée de manière à présenter des parois de forme cylindrique sensiblement concentriques.

La présente invention a pour but de fournir un élément filtrant permettant d'obtenir une capacité de rétention encore accrue par rapport à celle décrite dans le brevet européen mentionné plus haut, même lorsque la répartition dimensionnelle des particules à filtrer est étroite et dont la structure est simple à fabriquer.

À cet effet, la poche filtrante à haute capacité de rétention qu'elle propose comporte une couche de matériau filtrant plissée de façon à réaliser un plissé concentrique, c'est-à-dire que la couche est pliée de manière à présenter des parois de forme cylindrique sensiblement concentriques, caractérisée en ce qu'elle présente également une enveloppe extérieure dans laquelle prend place le plissé concentrique, et en ce que la porosité de l'enveloppe extérieure est différente de celle de la couche formant le plissé concentrique, le diamètre des pores de la couche formant le plissé étant plus important que celui de l'enveloppe.

Cette disposition d'une couche de matériau filtrant permet d'augmenter très sensiblement la surface active du filtre par rapport à une poche filtrante classique. Cette surface détermine la capacité de rétention de la poche filtrante. Le pliage du matériau filtrant selon l'invention permet d'utiliser simultanément toute la surface de la couche de matériau filtrant. Le liquide destiné à être filtré ne passe pas par plusieurs parois du plissé concentrique, mais il traverse simultanément le matériau filtrant sur toute sa surface. Les différentes parois, d'un point de vue hydraulique, ne sont donc pas disposées en série mais en parallèle.

L'enveloppe extérieure permet d'une part de maintenir la couche de matériau filtrant sous sa forme de plissé concentrique lorsqu'elle est soumise à la pression du liquide à filtrer. D'autre part, cette enveloppe extérieure présente des propriétés filtrantes et coopère ainsi avec la garniture plissée pour augmenter les performances de la poche filtrante. Les fonctions de rétention et d'efficacité sont découplées. Grâce à l'enveloppe extérieure et aux différences de porosité, le plissé peut retenir les plus grosses particules présentes dans le liquide à filtrer et aussi la plus grosse quantité de particules, tandis que l'enveloppe extérieure retient les particules de plus petit diamètre. L'enveloppe extérieure détermine alors l'efficacité de la poche filtrante tandis que le plissé concentrique permet d'assurer une capacité de rétention importante.

Pour une meilleure filtration, aussi bien le matériau filtrant constituant le plissé concentrique que celui constituant l'enveloppe extérieure présentent un voile de protection du côté amont, une partie active centrale et un voile extérieur côté aval pour assurer la résistance mécanique de l'ensemble de la couche filtrante.

Le voile intérieur protège la partie active, qui est généralement assez fragile, des agressions éventuelles extérieures. La partie active filtre le liquide, tandis que le voile extérieur supporte mécaniquement cette structure.

La partie active centrale est constituée avantageusement d'un non tissé en fibres synthétiques, en polypropylène par exemple.

Pour garantir une bonne capacité de rétention et s'assurer que le liquide traverse le plissé concentrique sur toute sa surface, des moyens intercalaires sont de préférence prévus pour maintenir un espace entre deux parois voisines du plissé. Ces moyens intercalaires peuvent être par exemple constitués par un feutre très aéré.

De manière à pouvoir s'adapter facilement à des filtres classiques, la poche filtrante selon l'invention comporte également un anneau sur lequel est attaché le plissé concentrique par l'intermédiaire de sa paroi la plus extérieure et sur lequel est aussi éventuellement attaché une enveloppe extérieure. Une anse peut aussi être prévue pour faciliter la mise en place et le retrait de la poche filtrante.

L'invention propose également un procédé permettant de fabriquer un plissé concentrique tel que décrit ci-dessus. Ce procédé comporte les étapes suivantes :
- à partir d'une feuille plane de matériau filtrant, constituée d'une ou plusieurs épaisseurs, découpe d'un développé d'une forme sensiblement triangulaire isocèle, la base étant relativement petite par rapport à la hauteur et la pointe du triangle présentant une découpe en W,
- pliage du développé le long de la hauteur du triangle,
- solidarisation, par couture ou soudure par exemple, des deux longs côtés du triangle, une ouverture subsistant au niveau de la base du triangle,
- passages successifs de la pointe du triangle par l'ouverture formée par la base du triangle, un pli étant réalisé à la fin de chaque passage.

De toute façon, l'invention sera bien comprise à l'aide de la description qui suit, en référence au dessin schématique annexé, représentant à titre d'exemple non limitatif une forme d'exécution d'une poche filtrante selon l'invention.
Figure 1 est une perspective partiellement éclatée d'une poche selon l'invention,
Figure 2 est une demi-coupe longitudinale à échelle agrandie de la poche de la figure précédente,
Figure 3 est une vue de dessus d'un développé permettant de réaliser la garniture interne de la poche des figures 1 et 2,
Figure 4 montre schématiquement le pliage du développé de la figure précédente pour obtenir une garniture interne d'une poche selon l'invention, et
Figure 5 montre cette garniture interne une fois le pliage réalisé.

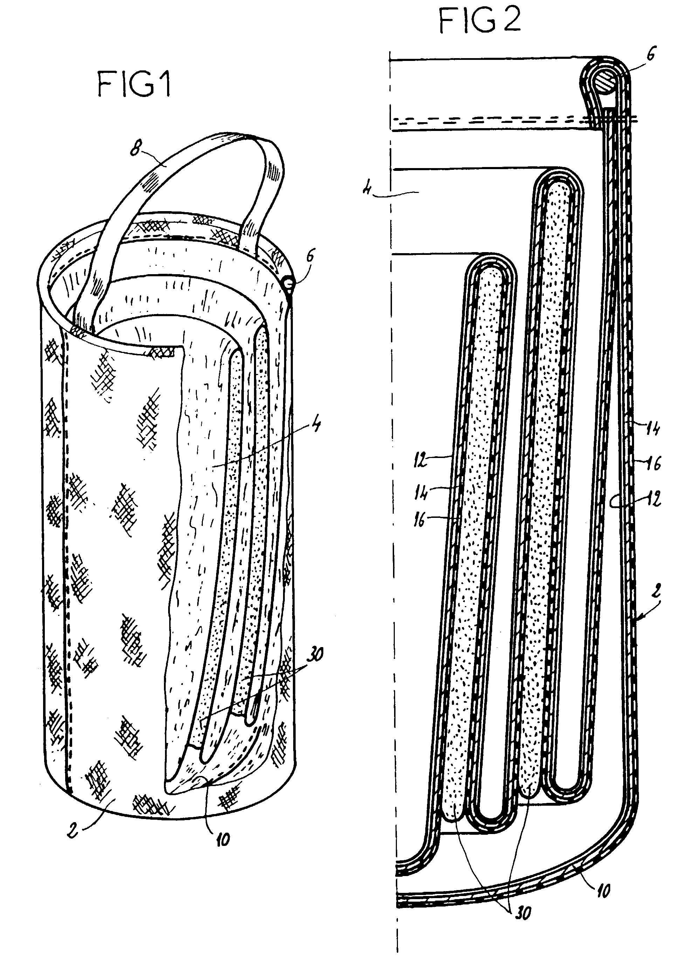

La figure 1 montre une poche filtrante comportant une enveloppe extérieure 2, une garniture intérieure 4, un anneau 6 et une anse 8.

L'enveloppe extérieure 2 est constituée par une poche sensiblement cylindrique circulaire, ouverte à l'une de ses extrémités et fermée à son autre extrémité par un fond 10 sensiblement hémisphérique.

Cette enveloppe extérieure 2 est réalisée dans un matériau filtrant constitué de trois épaisseurs : un voile interne 12 de protection, une partie active 14 et un voile extérieur 16.

La partie active 14 est la partie filtrante de l'enveloppe. Sa porosité est déterminée pour empêcher le passage de particules dont la taille dépasse une dimension donnée. Elle est réalisée dans un non tissé de fibres de polypropylène. Bien entendu, tout autre matériau filtrant connu peut être utilisé à la place du non tissé de polypropylène.

Le voile interne 12 de protection sert à protéger la partie active 14 de l'enveloppe de diverses agressions extérieures qui risqueraient d'endommager cette partie active 14.

Le voile externe 16 est par exemple constitué des mêmes fibres que la partie active 14, mais assemblées d'une autre manière. Ce voile 16 peut ainsi assurer la résistance mécanique de l'ensemble de la poche filtrante. Il ne présente pas de propriétés filtrantes.

Une telle structure en trois épaisseurs est déjà connue de l'homme du métier.

La garniture intérieure 4 est réalisée dans un matériau filtrant constitué également de trois épaisseurs 12, 14 et 16. Ce matériau est semblable à celui utilisé pour l'enveloppe extérieure 2. La différence réside uniquement dans la porosité de la partie active 14. Les pores de cette partie active seront de préférence d'un diamètre plus important dans la garniture interne 4 que dans l'enveloppe extérieure 2.

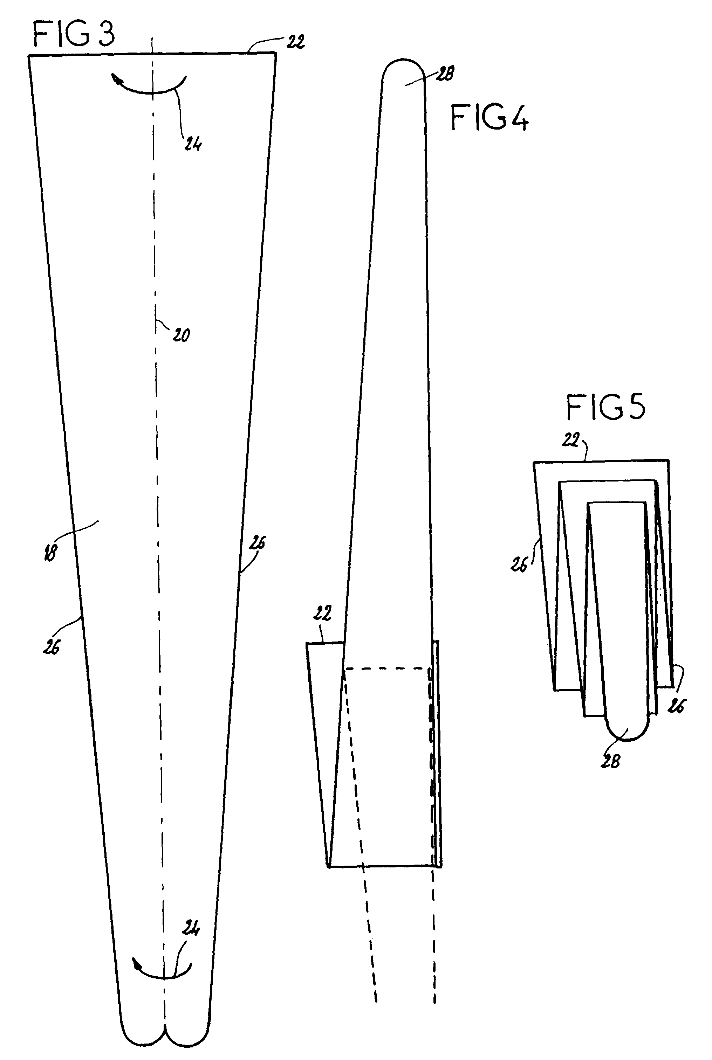

La garniture intérieure 4 est pliée de manière à former un plissé circulaire concentrique. Les figures 3 à 5 expliquent le mode d'obtention de ce plissé.

La figure 3 montre le développé 18 de la garniture intérieure 4. Il s'agit d'une pièce plane en matériau filtrant tel que décrit ci-dessus. Cette pièce présente la forme d'un triangle isocèle. La hauteur 20 de ce triangle, représentée en trait mixte, est grande par rapport à la base 22 de celui-ci. La pointe du triangle, opposée à la base 22 est découpée et présente sensiblement une forme de W arrondi.

Pour réaliser la garniture intérieure 4, le développé 18 est tout d'abord plié en deux, le long de la hauteur 20, comme indiqué par les flèches 24.

Les bords 26 du triangle ne constituant pas la base 22 sont alors rendus solidaires l'un de l'autre, par exemple en les cousant ou en les soudant. On obtient donc ainsi une poche sensiblement conique comportant un ouverture du côté de la base 22 et une pointe 28 du côté opposé à celle-ci.

La poche ainsi obtenue est maintenue au niveau le la base 22 et la pointe 28 est passée à travers l'ouverture. Cette pointe 28 ressort de l'ouverture et est amenée jusqu'à la position montrée sur la figure 4, dans laquelle un pli est réalisé à une distance prédéterminée de l'ouverture.

La pointe 28 passe alors à nouveau dans l'ouverture pour venir dans la position représentée en pointillés sur la figure 4.

L'opération est recommencée plusieurs fois jusqu'à obtenir un garniture telle que représentée (en coupe) sur la figure 5.

Le bord de l'ouverture, c'est à dire la base 22 est cousue (ou bien soudée) à l'anneau 6, de même que l'enveloppe extérieure 2. L'anse 8 permet de plus facilement mettre en place et retirer la poche filtrante du filtre auquel elle est destinée.

En réalisant une garniture intérieure 4 de cette manière, la surface active de la poche filtrante est très sensiblement augmentée. Par rapport à une poche de l'état de la technique qui présente une forme sensiblement semblable à l'enveloppe extérieure 2 mais ne contient pas de garniture intérieure 4, la surface active peut par exemple être multipliée par quatre.

La poche filtrante est destinée à filtrer du liquide contenant des particules solides qui doivent être éliminées du fluide. Dans cette poche selon l'invention, le liquide ne passe pas successivement à travers plusieurs couches de matériau filtrant comme c'est le cas pour les poches filtrantes à haute capacité de rétention de l'état de la technique, mais il passe une fois à travers toute la surface de la garniture intérieure 4. Les diverses parois de cette garniture ne sont pas montées du point de vue hydraulique en série les une derrières les autres, mais en parallèle.

La forme conique de la poche qui est plissée pour réaliser la garniture intérieure 4 permet de créer un espace entre deux parois voisines séparées par un pli. Cependant, des essais ont montré qu'il arrivait que deux parois reposent l'une contre l'autre et qu'alors le liquide à filtrer ne passe pas par ces parois.

Une solution consiste à maintenir les parois écartées, à l'aide d'intercalaires 30 (figures 1 et 2). De nombreuses formes de réalisation peuvent être envisagées pour ces intercalaires 30. L'invention propose de les réaliser à partir d'un feutre très aéré et souple. Ainsi, l'intercalaire ne gêne pas l'écoulement du liquide et il ne risque pas de détériorer la garniture intérieure 4.

Comme indiqué plus haut, la porosité de la partie active 14 est différente dans la garniture intérieure 4 et dans l'enveloppe extérieure 2. Les pores au niveau de l'enveloppe extérieure sont plus fines.

Ainsi, le liquide chargé des particules à filtrer passe tout d'abord dans la garniture intérieure où il est débarrassé de ses plus grosses particules, puis il est filtré par l'enveloppe extérieure. Cette dernière détermine donc l'efficacité du filtre, tandis que la garniture intérieure présentant une grande surface de filtration assure une capacité de rétention élevée.

Un exemple numérique est indiqué ci-après. Les valeurs données le sont à titre indicatif et ne sauraient limiter l'étendue de l'invention qui peut être réalisée pour d'autres applications avec des valeurs tout à fait différentes.

La partie centrale plissée du filtre est ainsi par exemple réalisée avec cinq plis. Ceci permet d'augmenter la surface de rétention de 380%, par rapport à une poche de même dimension extérieure, ou bien encore par rapport à l'enveloppe extérieure.

La dimension des pores de la partie active utilisée pour réaliser le plissé concentrique est de 10µm nominal. Cette partie active est réalisée avec des fibres de polypropylène.

L'enveloppe extérieure comporte également des fibres de polypropylène dans sa partie active, mais ici, la dimension nominale des pores est de 5µm.

Un intercalaire de 2,5mm d'épaisseur est utilisé pour séparer les différentes parois filtrantes. La dimension des pores du matériau intercalaire est bien plus importante que celle du matériau filtrant du plissé concentrique et de l'enveloppe extérieure, puisque ce matériau intercalaire n'a pas de fonction filtrante. La dimension des pores choisie dans cet exemple est de 100µm nominal.

Avec un tel élément filtrant, la capacité de rétention moyenne est de 800g pour un élément filtrant présentant un diamètre extérieur de 180mm et une longueur de 850mm. Ce résultat est obtenu en utilisant un polluant connu de l'homme du métier sous le nom de ACFTD, avec une concentration de 30mg/l et un débit de 3m³/h et avec une perte de charge finale de 1,2bar. L'efficacité obtenue est de 98% à 5µm.

Comme il va de soi, l'invention ne se limite pas à la forme d'exécution décrite ci-dessus à titre d'exemple de réalisation préférentiel mais non limitatif ; elle en embrasse au contraire toutes les variantes.

Ainsi par exemple, le matériau filtrant n'est pas forcément un matériau constitué de trois épaisseurs.

De même la forme circulaire du plissé peut être modifiée. En pliant le développé de la garniture intérieure selon, non pas un, mais deux ou trois "hauteurs", la section de la poche peut être triangulaire ou carrée. La forme circulaire est préférée car elle correspond aux filtres actuels.

La présence d'intercalaires permet l'obtention de meilleurs résultats. Les figures montrent une forme de réalisation où l'intercalaire est placé au niveau d'un pli sur deux. Il est envisageable de placer des intercalaires au niveau de chaque pli de la garniture, ou bien de ne prévoir qu'un seul intercalaire, etc. La solution à adopter dépend de la taille de la poche filtrante et aussi du flux traversant cette poche.

## Revendications

1. Poche filtrante à haute capacité de rétention, destinée notamment à filtrer des particules se trouvant dans un liquide, comportant une couche de matériau filtrant plissée de façon à réaliser un plissé concentrique (4), c'est-à-dire que la couche est pliée de manière à présenter des parois de forme cylindrique sensiblement concentriques, caractérisée en ce qu'elle présente également une enveloppe extérieure (2) dans laquelle prend place le plissé concentrique (4), et en ce que la porosité de l'enveloppe extérieure (2) est différente de celle de la couche formant le plissé concentrique (4), le diamètre des pores de la couche formant le plissé étant plus important que celui de l'enveloppe.

2. Poche filtrante selon la revendication 1, caractérisée en ce que le matériau filtrant présente un voile de protection (12) du côté amont, une partie active (14) centrale et un voile extérieur (16) côté aval pour assurer la résistance mécanique de l'ensemble de la couche filtrante.

3. Poche filtrante selon la revendication 1, caractérisée en ce que l'enveloppe extérieure (2) est réalisée dans un matériau filtrant présentant un voile de protection (12) du côté amont, une partie active (14) centrale et un voile extérieur (16) côté aval pour assurer la résistance mécanique de l'ensemble de la couche filtrante.

4. Poche filtrante selon la revendication 2 ou 3, caractérisée en ce que la partie active centrale (14) est constituée d'un non tissé en fibres synthétiques, en polypropylène par exemple.

5. Poche filtrante selon l'une des revendications 1 à 4, caractérisée en ce que des moyens intercalaires (30) sont prévus pour maintenir un espace entre deux parois voisines du plissé.

6. Poche filtrante selon la revendication 5, caractérisée en ce que les moyens intercalaires (30) sont constitués par un feutre très aéré.

7. Poche filtrante selon l'une des revendications 1 à 6, caractérisée en ce qu'elle comporte également un anneau (6) sur lequel est attaché le plissé concentrique (4) par l'intermédiaire de sa paroi la plus extérieure et sur lequel est aussi éventuellement attaché une enveloppe extérieure (2).

## Patentansprüche

1. Filterbeutel mit hoher Rückhaltekapazität, insbesondere dazu bestimmt, Partikel herauszufiltern, die sich in einer Flüssigkeit befinden, der eine Einlage aus Filtermaterial umfasst, die so plissiert ist, dass ein konzentrisches Plissee (4) gebildet wird, das heisst, die Einlage ist so gefaltet, dass sie zylinderförmige, deutlich konzentrische Wände hat, dadurch gekennzeichnet, dass sie auch eine äussere Umhüllung (2) aufweist, in der sich das konzentrische Plissee (4) befindet, und dadurch gekennzeichnet, dass die Porengrösse der äusseren Umhüllung (2) verschieden ist von derjenigen der Einlage, die das konzentrische Plissee (4) bildet, wobei der Porendurchmesser der das Plissee bildenden Einlage grösser ist als derjenige der Umhüllung.

2. Filterbeutel nach Anspruch 1, dadurch gekennzeichnet, dass das Filtermaterial eine Schutzschicht (12) auf der fliessaufwärtigen Seite, einen aktiven Teil (14) in der Mitte und eine äussere Schicht (16) auf der fliessabwärtigen Seite aufweist, um die mechanische Festigkeit der gesamten Filtereinlage zu gewährleisten.

3. Filterbeutel nach Anspruch 1, dadurch gekennzeichnet, dass die äussere Umhüllung (2) aus einem Filtermaterial gefertigt ist, das eine Schutzschicht (12) auf der fliessaufwärtigen Seite, einen aktiven Teil (14) in der Mitte und eine äussere Schicht (16) auf der fliessabwärtigen Seite zeigt, um die mechanische Festigkeit der gesamten Filtereinlage zu gewährleisten.

4. Filterbeutel nach Anspruch 2 oder 3, dadurch gekennzeichnet, dass der aktive Teil (14) in der Mitte aus einem Vliesstoff aus synthetischen Fasern, zum Beispiel aus Polypropylen, besteht.

5. Filterbeutel nach einem der Ansprüche 1 bis 4, dadurch gekennzeichnet, dass Zwischenlagen (30) vorgesehen sind, um einen Raum zwischen zwei benachbarten Wänden des Plissee aufrechtzuerhalten.

6. Filterbeutel nach Anspruch 5, dadurch gekennzeichnet, dass die Zwischenlagen (30) aus einem sehr lufthaltigen Filz bestehen.

7. Filterbeutel nach einem der Ansprüche 1 bis 6, dadurch gekennzeichnet, dass er auch einen Ring (6) umfasst, an dem das konzentrische Plissee (4) mittels seiner ganz aussen liegenden Wand befestigt ist und an dem gegebenenfalls auch eine äussere Umhüllung (2) befestigt ist.

## Claims

1. Filtering bag with high retention capacity, intended in particular to filter particles found in a liquid, having a layer of filtering material folded so as to form a concentric set of pleats (4), that is to say the layer is folded so as to have substantially concentric cylindrically shaped walls, characterised in that it also has an outer container (2) in which the concentric set of pleats (4) are located, and in that the porosity of the outer container (2) is different from that of the layer forming the concentric set of pleats (4), the diameter of the pores in the layer forming the set of pleats being larger than that of the container.

2. Filtering bag according to Claim 1, characterised in that the filtering material has a protective cover (12) on the upstream side, an active central part (14) and an outer cover (16) on the downstream side for providing the entire filtering layer with mechanical strength.

3. Filtering bag according to Claim 1, characterised in that the outer container (2) is made of a filtering material having a protective cover (12) on the upstream side, an active central part (14) and an outer cover (16) on the downstream side to provide the entire filtering layer with mechanical strength.

4. Filtering bag according to Claim 2 or 3, characterised in that the active central part (14) consists of a nonwoven fabric of synthetic fibres, for example of polypropylene.

5. Filtering bag according to one of Claims 1 to 4, characterised in that insert means (30) are provided for maintaining a space between two neighbouring walls of the set of pleats.

6. Filtering bag according to Claims 5, characterised in that the insert means (30) consist of a highly ventilated felt.

7. Filtering bag according to one of Claims 1 to 6, characterised in that it also comprises a ring (6), to which the concentric set of pleats (4) is attached by means of its outermost wall, and to which an outer container (2) is also optionally attached.
